# EUROPEAN PATENT APPLICATION

(11) **EP 3 961 429 A1**
(43) Date of publication of application: **02.03.2022**
(21) Application number: 21181219.3
(22) Date of filing: 23.06.2021
(51) Int. Cl.: G06F 16/71, G06F 16/783, G06Q 50/00, H04L 9/00

(54) **METHOD AND APPARATUS FOR STORING EVIDENCE COLLECTION PROCESS VIDEO SEGMENT**

(30) Priority: 28.08.2020 CN 202010889930
(71) Applicant: Alipay (Hangzhou) Information Technology Co., Ltd., Hangzhou, Zhejiang 310000 (CN)
(72) Inventor: Yang, Xinying, Hangzhou, Zhejiang, 310000 (CN)
(74) Representative: Goddar, Heinz J.

(57) **Abstract**

Disclosed are a method and an apparatus for storing an evidence collection process video segment. When evidence collection processes respectively corresponding to at least two web pages specified by a user are recorded by the same evidence collection process video, and the evidence collection process video is stored in the blockchain, if the user wants to adduce evidence for a single case in the judicial procedure (generally, one web page corresponds to one case, and is used as evidence in the case), the user can request an evidence collection service device to clip an evidence collection process corresponding to web page evidence needed for the current case from the evidence collection process video to obtain a video segment for being committed to a blockchain for storage.

## Description

### TECHNICAL FIELD

Implementations of the present specification relate to the field of information technologies, and in particular, to a method and an apparatus for storing an evidence collection process video segment.

### BACKGROUND

Currently, a common mode of performing network evidence collection based on a blockchain is as follows: When a user identifies that evidence content that needs to be stored exists in a web page, the user sends a network evidence storage request to a blockchain storage service provider, where the storage request specifies a web page address where evidence is to be collected. A storage service device invokes a trusted evidence collection service device (e.g., an evidence collection service device of a notary office), and the evidence collection service device visits the web page address where evidence is to be collected and browses the web page. The evidence collection service device performs video recording on the whole process of visiting and browsing the web page to obtain an evidence collection process video, and commits the evidence collection process video to the blockchain for storage.

In a subsequent judicial procedure, the user can use the evidence collection video that has been stored in the blockchain to adduce evidence. The judicial department usually determines that evidence is trustworthy based on the trustworthiness of the evidence collection service device and the trustworthiness of the blockchain.

In practice, the blockchain storage service provider usually performs charging once for one storage request sent by a user. Therefore, to reduce expenses, the user usually specifies more than one web page address where evidence is to be collected through one storage request, and different web page addresses relate to evidence content of different cases. In this case, the evidence collection service device records the process of visiting and browsing more than one web page into an evidence collection process video. However, this poses a problem for the user to adduce judicial evidence subsequently.

### SUMMARY

To solve a technical problem that it is difficult for a user to use an evidence collection process video stored in a blockchain and recording evidence collection processes of at least two web pages to adduce evidence for a single case, implementations of the present specification provide a method and an apparatus for storing an evidence collection process video segment. Technical solutions are as follows:

According to a first aspect of the implementations of the present specification, a method for storing an evidence collection process video segment is provided. The method is applied to an evidence collection service device and includes: obtaining a clip-for-storage request initiated by a user, the clip-for-storage request specifying a to-be-clipped evidence collection process video and clipping range information, and the evidence collection process video being obtained by the evidence collection service device by recording evidence collection processes for at least two web pages; determining whether the evidence collection process video is stored in a blockchain; and clipping a video segment from the evidence collection process video based on the clipping range information in response to determining that the evidence collection process video is stored in the blockchain, the video segment being used to record an evidence collection process corresponding to any one of the at least two web pages; and committing the video segment to the blockchain for storage.

According to a second aspect of the implementations of the present specification, an apparatus for storing an evidence collection process video segment is provided. The apparatus is applied to an evidence collection service device and includes: an acquisition module, configured to obtain a clip-for-storage request initiated by a user, the clip-for-storage request specifying a to-be-clipped evidence collection process video and clipping range information, and the evidence collection process video being obtained by the evidence collection service device by recording evidence collection processes for at least two web pages; a determining and processing module, configured to determine whether the evidence collection process video is stored in a blockchain and if yes, clip a video segment from the evidence collection process video based on the clipping range information, the video segment being used to record an evidence collection process corresponding to any one of the at least two web pages; and a committing module, configured to commit the video segment to the blockchain for storage.

According to the technical solutions provided in the implementations of the present specification, when evidence collection processes respectively corresponding to at least two web pages specified by a user are recorded by the same evidence collection process video, and the evidence collection process video is stored in the blockchain, if the user wants to adduce evidence for a single case in the judicial procedure (generally, one web page corresponds to one case, and is used as evidence in the case), the user can request an evidence collection service device to clip an evidence collection process corresponding to web page evidence needed for the current case from the evidence collection process video to obtain a video segment for being committed to a blockchain for storage, so that evidence is adduced for a single case. As such, the evidence collection service device may not need to be triggered to perform video recording, so that an evidence collection process of a single web page is stored at a lower cost. In addition, the evidence collection process of the single web page can be stored even if the content of the single web page is changed or deleted from the network.

It should be understood that the previous general description and the following detailed description are merely exemplary and illustrative, and cannot limit the implementations of the present specification.

In addition, any one of the implementations of the present specification does not need to achieve all of the previous effects.

### BRIEF DESCRIPTION OF DRAWINGS

To describe the technical solutions in the implementations of the present specification or in the existing technologies more clearly, the following briefly describes the accompanying drawings required for describing the implementations or the existing technologies. Clearly, the accompanying drawings in the following description merely show some implementations of the present specification, and a person of ordinary skill in the art can still derive other drawings from these accompanying drawings.
FIG. 1 is a schematic flowchart illustrating a method for storing an evidence collection process video segment according to an implementation of the present specification;
FIG. 2 is a schematic architectural diagram illustrating a blockchain storage system according to an implementation of the present specification;
FIG. 3 is a schematic architectural diagram illustrating another blockchain storage system according to an implementation of the present specification;
FIG. 4 is a schematic structural diagram illustrating an apparatus for storing an evidence collection process video segment according to an implementation of the present specification; and
FIG. 5 is a schematic structural diagram illustrating a computer device for configuring the method in the implementations of the present specification.

### DETAILED DESCRIPTION

Currently, committing network evidence to a blockchain for storage can ensure that the network evidence is difficult to tamper with subsequently. However, the blockchain cannot ensure that the network evidence committed to the blockchain is authentic. Therefore, the party collecting the network evidence needs to be safe and trustworthy.

In practice, some commercial institutions (blockchain storage service providers) provide network evidence storage services to the market. Specifically, the commercial institutions can register accounts with the blockchain and commit network evidence requested by users to the blockchain through their own accounts. Commercial institutions usually reach an agreement with the judicial department, and the judicial department approves the trustworthiness of an evidence collection service device. Therefore, network evidence obtained by the evidence collection service device and committed to the blockchain is trustworthy and difficult to tamper with, and can be approved by the judicial department. It should be noted that the blockchain network in the present specification can be specifically a public blockchain network or a consortium blockchain network. If the blockchain network is a public blockchain network, the blockchain service provider can control blockchain nodes. If the blockchain is a consortium blockchain network, the blockchain service provider can be a consortium node, or may not be a consortium node, but interacts with the consortium blockchain network from the outside of the consortium blockchain network through an account registered with the consortium blockchain network.

In the present specification, the evidence collection service device can be responsible for both collecting evidence and committing the collected network evidence to the blockchain. In this case, the evidence collection service device is actually a device of a blockchain storage service provider. In addition, a storage service device can also exist. In this case, the storage service device is a device of the blockchain storage service provider, and the evidence collection service device can be a device of a trusted evidence collection institution (e.g., a notary office) other than the blockchain storage service provider. After collecting evidence, the evidence collection service device commits the network evidence to the storage service device, so that the storage service device further commits the network evidence to the blockchain for storage. The following describes implementations in which the evidence collection service device is responsible for both collecting evidence and committing the network evidence to the blockchain. On this basis, a person skilled in the art can easily understand specific implementations after a storage device is introduced.

In the present specification, network evidence generally refers to a web page that includes evidence content. For example, a certain music website provides a user with a pirated music download service, and a related web page is network evidence. In practice, to enable a collected web page to be more illustrative, the evidence collection service device usually performs video recording on a process of visiting and browsing a target web page to obtain an evidence collection process video. The evidence collection process video is specifically used as network evidence to be stored.

It should be noted that, for the blockchain storage service provider, it is the most cost-consuming for the evidence collection service device to perform video recording on the evidence collection process. From a technical point of view, the cost of starting the evidence collection service device to perform video recording on the evidence collection process once is relatively fixed (which is little affected by the duration of the evidence collection process), and the cost of starting the evidence collection service device to perform video recording multiple times is the sum of costs of starting the evidence collection service device each time. For example, the cost of starting the evidence collection service device to perform video recording on the evidence collection process once is about N, and the cost of starting the evidence collection service device to perform video recording twice is about 2N.

Based on this, the blockchain storage service provider usually performs charging once for one storage request initiated by a user. Under such a charging policy, to reduce expenses, the user usually specifies more than one web page address where evidence is to be collected through one storage request, and different web page addresses relate to evidence content of different cases. It should be noted that the user specifies more than one web page address where evidence is to be collected through one storage request also because the user does not usually follow proceedings, but negotiates with each infringer to obtain damages. Therefore, it is not necessary to pay for the storage of each infringement web page.

For example, if a user identifies that 10 web pages (infringers corresponding to the 10 web pages may be different) respectively provide pirated downloading of 10 songs created by the user, when requesting the blockchain storage service provider to collect and store evidence, the user usually requests the blockchain storage service provider to collect and store evidence of the 10 web pages at a time to reduce expenses. As such, the blockchain storage service provider invokes the evidence collection service device to successively visit and browse the 10 web pages, record the whole process into a video, and commit the video to the blockchain for storage. The user can negotiate with each infringer and present an evidence collection process video of an infringement web page corresponding to the infringer to obtain damages.

However, the user needs to adduce evidence for a single case if the user chooses to follow the proceedings subsequently. Continuing with the above example, the user only files a lawsuit against infringement web page No. 1 for various considerations (For example, if the lawsuit cost is relatively high, the user chooses one infringement web page for lawsuit. If the lawsuit effect is good, the user considers filing a lawsuit against other infringement web pages. If the lawsuit effect is poor, the user does not file a lawsuit against other infringement web pages. For another example, the user fails to reach a compensation agreement with an infringer of a certain infringement web page, and reaches a compensation agreement with infringers of the other 9 infringement web pages). In the proceedings corresponding to infringement web page No. 1, the user needs to present infringement facts of infringement web page No. 1 to the court, and present an evidence collection process video of visiting/browsing infringement web page No. 1. The court further determines whether the evidence collection process video corresponding to infringement web page No. 1 is stored in the blockchain.

However, recording and storage are previously performed on infringement web pages No. 1 to No. 10 together, and an evidence collection process of infringement web page No. 1 is not stored in the blockchain separately. Therefore, strictly, it cannot be proved that the evidence collection process video corresponding to infringement web page No. 1 is trustworthy. For this situation, when the user decides to file a lawsuit against infringement web page No. 1, the user may choose infringement web page No. 1 again to request the blockchain storage service provider for storage, but infringement web page No. 1 may be lost or the content is changed, and cannot achieve the expected proof effect. In addition, even if infringement web page No. 1 does not change, the actual evidence collection time is not the time of identifying the infringement but the time when the user decides to file a lawsuit. The actual evidence collection time may delay the judicially considered actual start time of infringement of the infringement web page.

In addition, it should be noted that even if a user needs to file a lawsuit against 10 infringement web pages at the same time, the user needs to file 10 lawsuits, which correspond to 10 cases, and the problem of adducing evidence for a single case still exists.

To solve the above problem, in one or more implementations of the present specification, after the user requests the evidence collection service device to collect evidence for at least two web pages and commit the recorded evidence collection process video to the blockchain for storage, if the user needs to adduce judicial evidence for a certain web page, the user can continue to request the evidence collection service device to clip a video segment corresponding to an evidence collection process of the web page from the evidence collection process video, so that the evidence collection service device commits the video segment to the blockchain for storage.

Through the one or more implementations of the present specification, when a user needs to adduce judicial evidence for a single web page, even if content of the single web page has been changed or deleted, the evidence for the single web page can be stored in the blockchain, and the storage process of the single web page can also be adopted by the judicial department as trustworthy evidence.

The technical solutions provided in the implementations of the present specification are described in detail below with reference to the accompanying drawings.

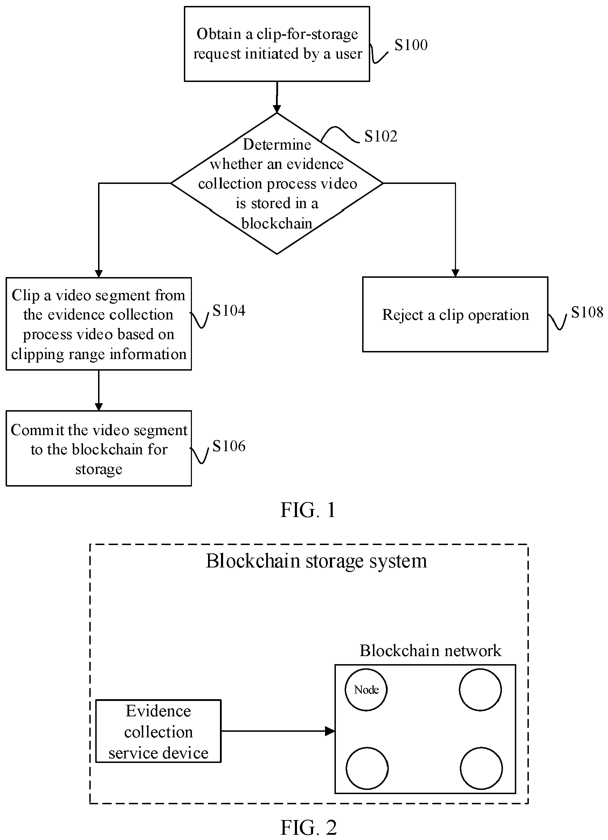

FIG. 1 is a schematic flowchart illustrating a method for storing an evidence collection process video segment according to an implementation of the present specification. The method includes the following steps.

S100. Obtain a clip-for-storage request initiated by a user.

The method shown in FIG. 1 is performed by an evidence collection service device. In practice, the user can install a client provided by a blockchain storage service provider, and send the clip-for-storage request to the evidence collection service device by using the client. In addition, alternatively, the user can visit a website of the blockchain storage service provider by using an Internet browser, and send the clip-for-storage request to the blockchain storage service provider by using a web page at the website.

It should be noted that if a storage service device of the blockchain storage service provider also exists, the user usually sends the clip-for-storage request to the storage service device, and the storage service device then forwards the clip-for-storage request to the evidence collection service device.

The clip-for-storage request usually specifies a to-be-clipped evidence collection process video and clipping range information, and the evidence collection process video is obtained by the evidence collection service device by recording evidence collection processes for at least two web pages.

In specific implementation, the clip-for-storage request can include a video identifier of the to-be-clipped evidence collection process video and the clipping range information. The clipping range information can be a video time range such as 00:50-02:30, representing clipping the 50^{th} second to the 2.5^{th} minute of the video.

S102. Determine whether the evidence collection process video is stored in a blockchain, and if yes, perform steps S104 and S106, or if no, perform step S108.

The evidence collection service device needs to determine whether the evidence collection process video has been stored in the blockchain. If the evidence collection process video is not stored in the blockchain, it indicates that the evidence collection process video is not necessarily trustworthy, and a video segment clipped from the evidence collection process video is not necessarily trustworthy, which does not meet the storage requirement.

Specifically, the evidence collection service device can determine whether an evidence collection record corresponding to the evidence collection process video is locally stored. If yes, the evidence collection service device determines that the evidence collection process video is stored in the blockchain. If no, it indicates that the evidence collection process video is not stored in the blockchain.

In addition, the clip-for-storage request can include a transaction hash of a blockchain transaction used to store the evidence collection process video, and the evidence collection service device can verify, based on the transaction hash, whether a blockchain transaction used to store the evidence collection process video is stored in the blockchain.

In addition, if the storage service device also exists, the evidence collection service device can send the transaction hash included in the clip-for-storage request to the storage service device, so that the storage service device determines whether a blockchain transaction corresponding to the transaction hash is stored in the blockchain. Subsequently, the evidence collection service device can receive a determining result returned by the storage service device.

S104. Clip a video segment from the evidence collection process video based on the clipping range information.

S106. Commit the video segment to the blockchain for storage.

Further, an evidence collection time corresponding to the evidence collection process video can be obtained and used as an evidence collection time corresponding to the video segment; and the video segment and the corresponding evidence collection time are committed to the storage service device for storage in the blockchain. It should be noted herein that actually, the video segment and the corresponding evidence collection time are encapsulated into one blockchain transaction (to implement association and binding) for being committed to the blockchain for storage.

As such, although the generation time of the video segment clipped from the evidence collection process video is the current time, because an endorsement of the evidence collection service device exists, the video segment can inherit the evidence collection time of the evidence collection process video, so that the judicially considered start time of infringement of the web page can be more realistic.

Storage in the blockchain needs to be described herein. In practice, a segment of video can be stored in the following way: The segment of video is encapsulated into a blockchain transaction and committed to the blockchain for storage; or hash calculation can be performed on the segment of video, and a hash value is encapsulated into a blockchain transaction and committed to the blockchain for storage.

S108. Reject a clip operation.

In step S108, evidence collection can also be performed for a web page corresponding to the video segment, and the evidence collection process is recorded into a video for being committed to the blockchain for storage.

According to the method shown in FIG. 1, when a user needs to adduce evidence for a single case, the user can request the evidence collection service device to clip, from an evidence collection process video that includes evidence collection processes of at least two web pages, a video segment corresponding to an evidence collection process of any one of the web pages, and store the video segment in the blockchain. For the evidence collection service device, the evidence collection process video is collected by the evidence collection service in advance, so the video segment clipped from the evidence collection process video is certainly trustworthy. For the court, the video segment is endorsed by the evidence collection service device and has been stored in the blockchain, so certainly, the video segment is also trustworthy. Further, the video segment can inherit the evidence collection time of the evidence collection process video, so as to be adopted by the judicial department.

In addition, the present specification further provides two blockchain storage systems, described as follows:

FIG. 2 is a schematic architectural diagram illustrating a blockchain storage system according to an implementation of the present specification. The blockchain storage system includes a consortium blockchain network and an evidence collection service device of a blockchain storage service provider.

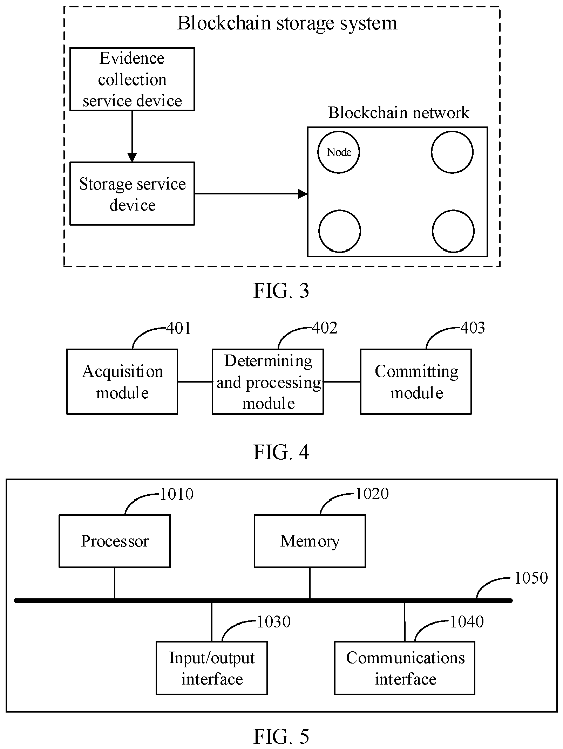

FIG. 3 is a schematic architectural diagram illustrating another blockchain storage system according to an implementation of the present specification. The blockchain storage system includes a consortium blockchain network, an evidence collection service device of a notary office, and a storage service device of a blockchain storage service provider.

FIG. 4 is a schematic structural diagram illustrating an apparatus for storing an evidence collection process video segment according to an implementation of the present specification. The apparatus is applied to an evidence collection service device and includes: an acquisition module 401, configured to obtain a clip-for-storage request initiated by a user, the clip-for-storage request specifying a to-be-clipped evidence collection process video and clipping range information, and the evidence collection process video being obtained by the evidence collection service device by recording evidence collection processes for at least two web pages; a determining and processing module 402, configured to determine whether the evidence collection process video is stored in a blockchain and if yes, clip a video segment from the evidence collection process video based on the clipping range information, the video segment being used to record an evidence collection process corresponding to any one of the at least two web pages; and a committing module 403, configured to commit the video segment to the blockchain for storage.

The acquisition module 401 is configured to receive the clip-for-storage request forwarded by a storage service device, where the clip-for-storage request is sent by the user to the storage service device.

The clip-for-storage request includes a transaction hash of a blockchain transaction used to store the evidence collection process video.

The determining and processing module 402 is configured to send the transaction hash included in the clip-for-storage request to the storage service device, so that the storage service device determines whether a blockchain transaction corresponding to the transaction hash is stored in the blockchain; and receive a determining result returned by the storage service device.

The determining and processing module 402 is configured to determine whether an evidence collection record corresponding to the evidence collection process video is locally stored.

The committing module 403 is configured to obtain an evidence collection time corresponding to the evidence collection process video, and use the evidence collection time as an evidence collection time corresponding to the video segment; and commit the video segment and the corresponding evidence collection time to a storage service device for storage in the blockchain.

An implementation of the present specification further provides a computer device. The computer device includes at least a memory, a processor, and computer programs that are stored in the memory and can run on the processor, and the processor implements functions of the device in the implementation of the present specification when executing the programs.

FIG. 5 is a more detailed schematic diagram illustrating a hardware structure of a computing device according to an implementation of the present specification. The device can include a processor 1010, a memory 1020, an input/output interface 1030, a communications interface 1040, and a bus 1050. The processor 1010, the memory 1020, the input/output interface 1030, and the communications interface 1040 are communicatively connected to each other inside the device by using the bus 1050.

The processor 1010 can be implemented by using a general-purpose central processing unit (CPU), a microprocessor, an application-specific integrated circuit (ASIC), one or more integrated circuits, etc., and is configured to execute related programs, so as to implement the technical solutions provided in the implementations of the present specification.

The memory 1020 can be implemented by using a read-only memory (ROM), a random access memory (RAM), a static storage device, a dynamic storage device, etc. The memory 1020 can store an operating system and another application program. When the technical solutions provided in the implementations of the present specification are implemented by using software or firmware, related program code is stored in the memory 1020, and is invoked and executed by the processor 1010.

The input/output interface 1030 is configured to connect to an input/output module, to input or output information. The input/output module (not shown in the figure) can be disposed in the device as a component, or can be externally connected to the device, to provide a corresponding function. The input module can include a keyboard, a mouse, a touchscreen, a microphone, various sensors, etc. The output module can include a display, a speaker, an oscillator, an indicator, etc.

The communications interface 1040 is configured to connect to a communications module (not shown in the figure), to implement communication and interaction between the device and another device. The communications module can perform communication wiredly (e.g., through a USB or a network cable), or can perform communication wirelessly (e.g., through a mobile network, Wi-Fi, or Bluetooth).

The bus 1050 includes a channel for transmitting information between components (e.g., the processor 1010, the memory 1020, the input/output interface 1030, and the communications interface 1040) of the device.

It should be noted that although only the processor 1010, the memory 1020, the input/output interface 1030, the communications interface 1040, and the bus 1050 of the device are shown, during implementation, the device can further include other components needed for implementing normal running. In addition, a person skilled in the art can understand that the device can include only components necessary for implementing the solutions in the implementations of the present specification, but does not necessarily include all the components shown in the figure.

An implementation of the present specification further provides a computer-readable storage medium storing computer programs. When the programs are executed by a processor, functions of the device in the implementation of the present specification are implemented.

The computer-readable medium includes persistent, non-persistent, mobile, and immobile media that can store information by using any method or technology. The information can be a computer-readable instruction, a data structure, a program module, or other data. Examples of the computer storage medium include but are not limited to a phase change RAM (PRAM), a static RAM (SRAM), a dynamic RAM (DRAM), a RAM of another type, a ROM, an electrically erasable programmable read only memory (EEPROM), a flash memory or another memory technology, a compact disc read-only memory (CD-ROM), a digital versatile disc (DVD), or another optical storage, a cassette, a cassette magnetic disk storage, or another magnetic storage device or any other non-transmission medium. The computer storage medium can be configured to store information that can be accessed by a computing device. As described in the present specification, the computer-readable medium does not include computer readable transitory media such as a modulated data signal and a carrier.

It can be seen from the previous descriptions of the implementations that a person skilled in the art can clearly understand that the implementations of the present specification can be implemented by using software and a necessary general hardware platform. Based on such an understanding, the technical solutions in the implementations of the present specification essentially or the part contributing to the existing technologies can be implemented in a form of a software product. The computer software product can be stored in a storage medium, such as a ROM/RAM, a magnetic disk, or an optical disc, and includes several instructions for instructing a computer device (which can be a personal computer, a service device, a network device, etc.) to perform the method described in the implementations of the present specification or in some parts of the implementations of the present specification.

The system, method, module, or unit illustrated in the previously described implementations can be specifically implemented by using a computer chip or an entity, or can be implemented by using a product having a certain function. A typical implementation device is a computer, and the computer can be specifically a personal computer, a laptop computer, a cellular phone, a camera phone, a smartphone, a personal digital assistant, a media player, a navigation device, an email receiving and sending device, a game console, a tablet, a wearable device, or any combination of these devices.

The implementations of the present specification are described in a progressive way. For same or similar parts of the implementations, references can be made to the implementations. Each implementation focuses on a difference from other implementations. Particularly, a device implementation is similar to a method implementation, and therefore is described briefly. For a related part, references can be made to some descriptions in the method implementation. The previously described apparatus implementations are merely examples. The modules described as separate parts can or cannot be physically separate. During implementation of the solutions in the implementations of the present application, functions of the modules can be implemented in one or more pieces of software and/or hardware. Some or all of the modules can be selected based on an actual need to implement the solutions of the implementations. A person of ordinary skill in the art can understand and implement the implementations of the present specification without making innovative efforts.

The previous descriptions are merely specific implementations of the implementations of the present specification. It should be noted that a person of ordinary skill in the art can further make several improvements or polishing without departing from the principle of the implementations of the present specification, and the improvements or polishing shall fall within the protection scope of the implementations of the present specification.

## Claims

1. A method for storing an evidence collection process video segment, applied to an evidence collection service device and comprising:
obtaining a clip-for-storage request initiated by a user, the clip-for-storage request specifying a to-be-clipped evidence collection process video and clipping range information, and the evidence collection process video being obtained by the evidence collection service device by recording evidence collection processes for at least two web pages;
determining whether the evidence collection process video is stored in a blockchain; and clipping a video segment from the evidence collection process video based on the clipping range information in response to determining that the evidence collection process video is stored in the blockchain, the video segment being used to record an evidence collection process corresponding to any one of the at least two web pages; and
committing the video segment to the blockchain for storage.

2. The method according to claim 1, wherein the obtaining the clip-for-storage request initiated by the user includes:
receiving the clip-for-storage request forwarded by a storage service device, wherein the clip-for-storage request is sent by the user to the storage service device.

3. The method according to claim 1, wherein the clip-for-storage request includes a transaction hash of a blockchain transaction used to store the evidence collection process video; and
the determining whether the evidence collection process video is stored in the blockchain includes:
sending the transaction hash included in the clip-for-storage request to the storage service device, so that the storage service device determines whether a blockchain transaction corresponding to the transaction hash is stored in the blockchain; and
receiving a determining result returned by the storage service device.

4. The method according to claim 1, wherein the determining whether the evidence collection process video is stored in the blockchain includes:
determining whether an evidence collection record corresponding to the evidence collection process video is locally stored; and determining that the evidence collection process video is stored in the blockchain in response to determining that the evidence collection record corresponding to the evidence collection process video is locally stored.

5. The method according to claim 1, wherein the committing the video segment to the blockchain for storage includes:
obtaining an evidence collection time corresponding to the evidence collection process video, and using the evidence collection time as an evidence collection time corresponding to the video segment; and
committing the video segment and the corresponding evidence collection time to a storage service device for storage in the blockchain.

6. An apparatus for storing an evidence collection process video segment, applied to an evidence collection service device and comprising:
an acquisition module, configured to obtain a clip-for-storage request initiated by a user, the clip-for-storage request specifying a to-be-clipped evidence collection process video and clipping range information, and the evidence collection process video being obtained by the evidence collection service device by recording evidence collection processes for at least two web pages;
a determining and processing module, configured to determine whether the evidence collection process video is stored in a blockchain; and clip a video segment from the evidence collection process video based on the clipping range information in response to determining that the evidence collection process video is stored in the blockchain, the video segment being used to record an evidence collection process corresponding to any one of the at least two web pages; and
a committing module, configured to commit the video segment to the blockchain for storage.

7. The apparatus according to claim 6, wherein the acquisition module is configured to receive the clip-for-storage request forwarded by a storage service device, wherein the clip-for-storage request is sent by the user to the storage service device.

8. The apparatus according to claim 6, wherein the clip-for-storage request includes a transaction hash of a blockchain transaction used to store the evidence collection process video; and
the determining and processing module is configured to send the transaction hash included in the clip-for-storage request to the storage service device, so that the storage service device determines whether a blockchain transaction corresponding to the transaction hash is stored in the blockchain; and receive a determining result returned by the storage service device.

9. The apparatus according to claim 6, wherein the determining and processing module is configured to determine whether an evidence collection record corresponding to the evidence collection process video is locally stored.

10. The apparatus according to claim 6, wherein the committing module is configured to obtain an evidence collection time corresponding to the evidence collection process video, and use the evidence collection time as an evidence collection time corresponding to the video segment; and commit the video segment and the corresponding evidence collection time to a storage service device for storage in the blockchain.

11. A computer device, comprising a memory, a processor, and computer programs that are stored in the memory and can run on the processor, the processor implements the method according to any one of claims 1 to 5 when executing the programs.
